# EUROPÄISCHE PATENTANMELDUNG

(11) **EP 1 375 322 A2**
(43) Veröffentlichungstag der Anmeldung: **02.01.2004**
(21) Anmeldenummer: 03011999.4
(22) Anmeldetag: 28.05.2003
(51) Int. Cl.: B62J 27/00

(54) **Sensoranordnung zum Auslösen eines Airbags für Motorräder**

(30) Priorität: 25.06.2002 DE 10228264
(71) Anmelder: Bayerische Motoren Werke Aktiengesellschaft, 80809 München (DE)
(72) Erfinder: Seidl, Josef, 84130 Dingolfing (DE); Bleicher, Stephan, 84069 Schierling (DE)

(57) **Zusammenfassung**

Die Erfindung betrifft eine Sensoranordnung zum Auslösen eines Airbags für Motorräder, bei denen die auf das Vorderrad ausgeübten Kräfte von der Gabel (2) über zwei in verschiedener Höhe angeordnete Bauteile in die Fahrzeugstruktur (5) eingeleitet werden, wobei im normalen Fahrbetrieb das obere Bauteil (3) Druckkräfte und das untere Bauteil (4) Zugkräfte aufnimmt und bei einem Aufprall des Vorderrades gegen ein Hindernis umgekehrte Verhältnisse herrschen. Dabei ist vorgesehen, daß der Sensor (6) auf Kraft- oder Längenänderungen anspricht und an mindestens einem der beiden Bauteile (3, 4) angeordnet ist.

## Beschreibung

Die Erfindung betrifft eine Sensoranordnung zum Auslösen eines Airbags für Motorräder, bei denen die auf das Vorderrad ausgeübten Kräfte von der Gabel über zwei in verschiedener Höhe angeordnete Bauteile in die Fahrzeugstruktur eingeleitet werden, wobei im normalen Fahrbetrieb das obere Bauteil Druckkräfte und das untere Bauteil Zugkräfte aufnimmt und bei einem Aufprall des Vorderrades gegen ein Hindernis umgekehrte Verhältnisse herrschen.

Bei Personenkraftwagen gehören Airbags bereits seit langem zur Standardausrüstung. Zum Auslösen eines zu einem solchen Airbag gehörenden Gasgenerators werden Beschleunigungssensoren verwendet, die auf die bei einem Unfall auftretende Verzögerung ansprechen und ein Signal an ein zentrales Steuergerät liefern. Das Steuergerät wertet das oder die gelieferten Signale aus und gibt gegebenenfalls einen Steuerbefehl zum Zünden des Gasgenerators.

In der jüngeren Vergangenheit sind auch Airbags für Motorräder vorgeschlagen worden. Dabei ist vorgesehen, den Beschleunigungssensor an der Steckachse der Teleskopgabel anzuordnen. Dieser Ort wurde deshalb gewählt, weil die Steckachse dasjenige Bauteil ist, das bei einem Aufprall des Vorderrades gegen ein Hindernis ohne Zeitverzug verzögert wird. Im Steckachsenbereich ist der Sensor aber erhöhten Umweltbelastungen ausgesetzt (Verschmutzung, Schnee, Nässe, Steinschlag usw.), weshalb besondere Schutzmaßnahmen wie Abdeckungen und Abdichtungen erforderlich sind. Außerdem ist die Integration des Sensors in das äußere Erscheinungsbild des Motorrades schwierig. Da die Federwege des Vorderrades von dem Sensor mitgemacht werden, sind große Kabelschleifen erforderlich, um Kabelbrüche zu vermeiden, aber große Federwege zu ermöglichen. Zur Vermeidung dieser Nachteile wurde auch vorgeschlagen, den Beschleunigungssensor im Bereich des Steuerkopfes anzuordnen. Da der Steuerkopfbereich bei einem Aufprall des Vorderrades gegen ein Hindernis wegen der dabei eintretenden Verformung der Gabel geringfügig später verzögert wird als die Steckachse, kommt es jedoch zu einer Zeitverzögerung bei der Abgabe des entsprechenden Signals an die Steuereinheit.

Der entscheidende Nachteil der herkömmlichen Sensoranordnung, ob an der Steckachse oder im Steuerkopfbereich, beruht aber auf der Wirkungsweise eines Beschleunigungssensors. Im Gegensatz zu einem Personenkraftwagen treten bei einem Motorrad im Fahrbetrieb die verschiedenartigsten Beschleunigungszustände auf, die an sich ungefährlich sind. Beispielsweise führt bei einem Zweiradfahrzeug das Durchfahren eines Schlaglochs zu einer erheblich stärkeren Beschleunigung der Fahrzeugstruktur als bei einem Vierradfahrzeug. Es ist auch der Fall zu berücksichtigen, daß das Vorderrad eines Motorrades bei sehr starker Beschleunigung vom Boden abhebt und anschließend wieder nach unten fällt. Obwohl in derartigen Fahrsituationen erhebliche Beschleunigungskräfte wirksam werden, muß eine Fehlauslösung des Airbags unter allen Umständen verhindert werden. Dabei ist zu berücksichtigen, daß ein Zweiradfahrzeug im Gegensatz zu einem Vierradfahrzeug nach einer Fehlauslösung des Airbags praktisch nicht mehr beherrschbar ist. Beschleunigungen, die im normalen Fahrbetrieb auftreten können, müssen daher in sehr aufwendigen Versuchen ermittelt werden, und es müssen besondere Algorithmen entwickelt werden, um die von derartigen "harmlosen" Beschleunigungen herrührenden Signale des Beschleunigungssensors von den tatsächlich kritischen Signalen im Falle eines Aufpralls zuverlässig zu trennen.

Der Erfindung liegt die Aufgabe zugrunde, eine Sensoranordnung zum Auslösen eines Airbags für Motorräder der eingangs genannten Gattung zu schaffen, mit der die vorstehend genannten Nachteile überwunden werden.

Erfindungsgemäß wird diese Aufgabe dadurch gelöst, daß der Sensor auf Kraft- oder Längenänderungen anspricht und an mindesten einem der beiden Bauteile angeordnet ist.

Die Erfindung beruht auf der Erkenntnis, daß bei einem Motorrad, bei dem die auf das Vorderrad ausgeübten Kräfte von der Gabel über zwei in verschiedener Höhe angeordnete Bauteile in die Fahrzeugstruktur eingeleitet werden, wegen der Schrägstellung der Gabel bestimmte Kräfteverhältnisse vorliegen. Im normalen Fahrbetrieb nimmt das obere Bauteil ausschließlich Druckkräfte auf, wohingegen das untere Bauteil ausschließlich Zugkräfte aufnimmt. Falls das Vorderrad jedoch gegen ein Hindernis aufprallen sollte, dann kehren sich die Kräfteverhältnisse um, d. h. das obere Bauteil nimmt Zugkräfte auf, wogegen das untere Bauteil Druckkräfte aufnimmt. Da der Sensor auf Kraft- oder Längenänderungen anspricht, ist eine Fehlauslösung des Airbags infolge von Fahrbahnstößen ausgeschlossen.

Der erfinderische Grundgedanke läßt sich bei unterschiedlich ausgebildeten Führungen des Vorderrades eines Motorrades verwirklichen. Bei einem Motorrad, bei dem die Gabel über obere und untere Längslenker mit der Fahrzeugstruktur verbunden ist, könnte zumindest an einem der Längslenker ein Sensor angeordnet sein, der auf Kraft- oder Längenänderungen anspricht. Bei einem Motorrad, bei dem die Gabel über ein Kugelgelenk und über einen Längslenker mit der Fahrzeugstruktur verbunden ist, könnte im Bereich des Kugelgelenks und/oder an dem Längslenker ein Sensor angeordnet sein. Schließlich könnte bei einem Motorrad, bei dem die Gabel in einem Führungsrohr gelagert ist, das über zwei in verschiedener Höhe angeordnete Streben mit der Fahrzeugstruktur verbunden ist, zumindest an einer der beiden Streben ein Sensor angeordnet sein.

Diese auf Kraft- oder Längenänderungen ansprechenden Sensoren sind vorzugsweise von Dehnmeßstreifen gebildet. Derartige Dehnmeßstreifen sind im Handel preiswert erhältlich, und sie sind robust und wenig störanfällig. Es sind aber auch Schalter einsetzbar, bei unfallbedingter Verformung der Bauteile aktiviert werden.

Wenn das Vorderrad des Motorrades mit geringer Geschwindigkeit auf ein Hindernis auftrifft, beispielsweise beim Rangieren in der Garage oder weil ein anderes Fahrzeug beim Anfahren am Berg rückwärts rollt, könnte es zu dem geschilderten Wechsel der Kräfteverhältnisse in den beiden Bauteilen kommen, welche die Gabel mit der Fahrzeugstruktur verbinden. Um im Falle eines solchen harmlosen Remplers eine Fehlauslösung des Airbags zu verhindern, ist zweckmäßiger Weise ein zusätzlicher Sensor vorhanden, der auf Beschleunigungskräfte anspricht. Die Auslösung des Airbags ist dann an zwei Voraussetzungen gebunden, daß einerseits der oder die auf Kraft- oder Längenänderungen ansprechenden Sensoren den vorstehend erläuterten Wechsel der Kräfteverhältnisse signalisieren, und daß andererseits der Beschleunigungssensor eine auf eine Gefahrensituation hinweisende ungewöhnlich große Bremsverzögerung signalisiert.

Die Erfindung wird nachfolgend anhand verschiedener Ausführungsbeispiele näher erläutert, die bei unterschiedlich ausgebildeten Vorderradführungen verwirklicht sind. Es zeigt:
Fig. 1 eine schematische Seitenansicht einer ersten Ausführungsform einer Vorderradführung,
Fig. 2 eine schematische Seitenansicht einer zweiten Ausführungsform einer Vorderradführung, und
Fig. 3 eine schematische Seitenansicht einer dritten Ausführungsform einer Vorderradführung.

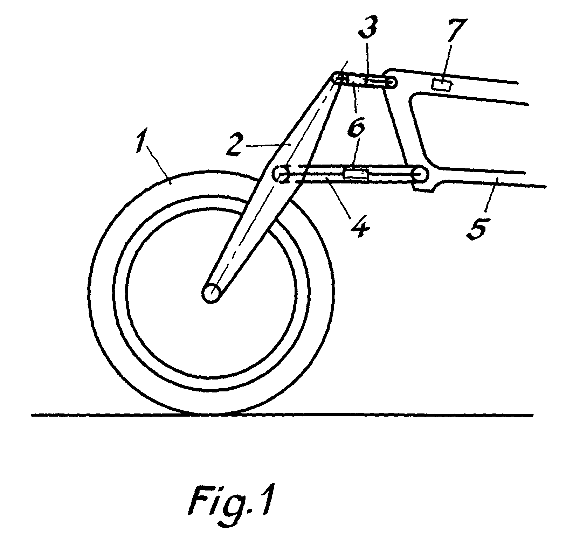

Die in Fig. 1 gezeigte Führung des Vorderrades 1 eines Motorrades umfaßt eine Gabel 2, die über einen oberen und einen unteren Längslenker 3 und 4 mit einer schematisch dargestellten Fahrzeugstruktur 5, beispielsweise einem Rahmen verbunden ist. An dem oberen und unteren Längslenker 3 und 4 sind Sensoren 6, die auf Kraft- oder Längenänderungen ansprechen, beispielsweise Dehnmeßstreifen, angeordnet. An der Fahrzeugstruktur 5 ist ein zusätzlicher Sensor 7 angeordnet, der auf Beschleunigungen anspricht. Die Sensoren 6 und 7 sind mit einer (nicht gezeigten) Steuereinheit verbunden. Die Steuereinheit verarbeitet die von den Sensoren 6 und 7 gelieferten Signale, um bei einem Unfall einen Gasgenerator zum Aufblasen eines (gleichfalls nicht gezeigten) Airbags zu zünden.

Im normalen Fahrbetrieb wirken die auf das Vorderrad 1 ausgeübten Kräfte im wesentlichen vertikal von unten nach oben, und der obere Längslenker 3 ist auf Druck und der untere Längslenker 4 ist auf Zug belastet. Wenn das Vorderrad 1 über eine Erhebung fährt oder in ein Schlagloch fällt, dann nehmen die von den beiden Längslenkern 3 und 4 aufgenommen Kräfte zwar zu, aber es handelt sich nach wie vor um Druck- bzw. Zugkräfte. Wenn jedoch auf das Vorderrad 1 infolge eines Aufpralls gegen ein Hindernis eine gegen die Fahrtrichtung wirkende horizontale Kraft ausgeübt wird, dann ändern sich die Kräfteverhältnisse in den beiden Längslenkern 3 und 4. Der obere Längslenker 3 wird jetzt auf Zug und der untere Längslenker wird auf Druck belastet. Dieser Wechsel der Kraftrichtung und die damit einhergehende Längenänderung der beiden Längslenker wird von den beiden Dehnmeßstreifen 6 ermittelt, und es wird ein entsprechendes Signal an die (nicht gezeigte) Steuereinheit weitergeleitet. Die durch den Aufprall bedingte Verzögerung des Motorrades wird vom Beschleunigungssensor 7 ermittelt, der ebenfalls ein entsprechendes Signal an die Steuereinheit abgibt. Wenn die Sensoren 6 und 7 anzeigen, daß einerseits der obere Längslenker 3 auf Zug und der untere Längslenker 4 auf Druck belastet ist, und daß andererseits eine starke Verzögerung des Motorrades eingetreten ist, dann wird der Gasgenerator zum Aufblasen eines Airbags ausgelöst.

Durch die Verknüpfung der auf Kraft- oder Längenänderungen ansprechenden Sensoren 6 und des auf eine Beschleunigung ansprechenden Sensors 7 können Fehlauslösungen des Gasgenerators zuverlässig verhindert werden. Der Gasgenerator wird nur dann ausgelöst, wenn die Sensoren 6 anzeigen, daß auf das Vorderrad 1 eine gegen die Fahrtrichtung wirkende horizontale Kraft ausgeübt wird, und wenn andererseits der Sensor 7 anzeigt, daß das Motorrad ungewöhnlich stark verzögert wird.

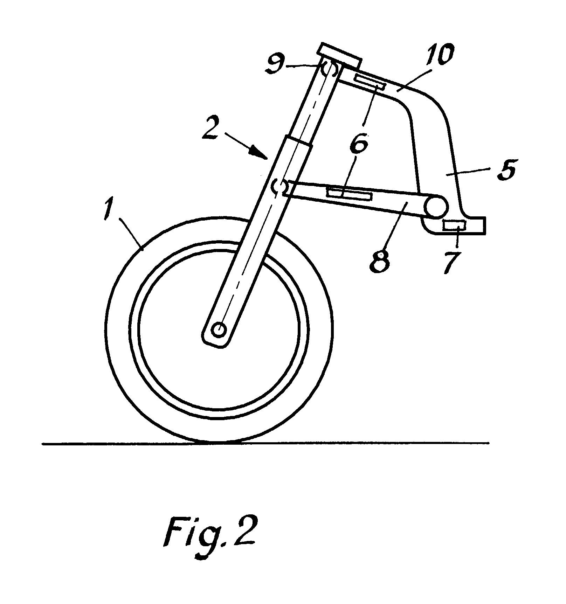

In Fig. 2 ist schematisch die Führung des Vorderrades 1 eines Motorrades mit nur einem Längslenker 8 gezeigt. Die Gabel 2 ist als Teleskopgabel ausgebildet, wobei der Längslenker 8 mit den Tauchrohren und mit der Fahrzeugstruktur 5 gelenkig verbunden ist. Die Standrohre der Gabel 2 sind durch ein Kugelgelenk 9 mit einer nach vorne ragenden Strebe 10 der Fahrzeugstruktur verbunden. An dem Längslenker 8 und an der nach vorne ragenden Strebe 10 der Fahrzeugstruktur 5 sind Dehnmeßstreifen 6 angeordnet, und an der Fahrzeugstruktur 5 ist ein Beschleunigungssensor 7 angeordnet. Die Kräfteverhältnisse in dem Längslenker 8 und in der Strebe 10 sind analog zu denjenigen in den beiden Längslenkern 3 und 4 des Ausführungsbeispiels nach Fig. 1. Die vorstehenden Ausführungen zur Wirkungsweise der Ausführungsform nach Fig. 1 treffen daher auf die Ausführungsform nach Fig. 2 in analoger Weise zu.

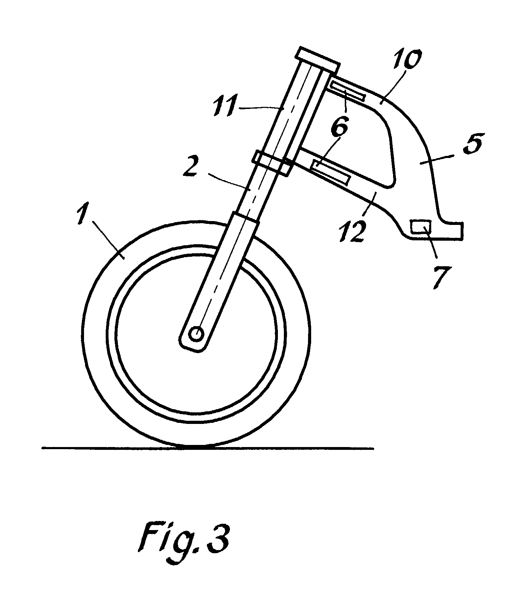

Bei der Ausführungsform nach Fig. 3 ist die Gabel 2 in einem Führungsrohr 11 drehbar gelagert, das an zwei von der Fahrzeugstruktur 5 nach vorne ragenden Streben 10 und 12 befestigt ist. Dehnmeßstreifen 6 sind an den Streben 10 und 12 angeordnet, und ein Beschleunigungssensor 7 ist an der Rahmenstruktur 5 angeordnet. In den beiden Streben 10 und 11 liegen daher ähnliche Kräfteverhältnisse vor wie in den beiden Längslenkern 3 und 4 des Ausführungsbeispiels nach Fig. 1. Die Ausführungen zur Wirkungsweise der Ausführungsform nach Fig. 1 treffen daher auf die Ausführungsform nach Fig. 2 in analoger Weise zu.

Wie dies vorstehend erläutert wurde, sind die auf Kraft- oder Längenänderungen ansprechenden Sensoren 6 an Bauteilen angeordnet, deren Belastung von Zug auf Druck und umgekehrt wechselt, wenn auf das Vorderrad 1 eine entgegen der Fahrtrichtung wirkende Kraft ausgeübt wird, welche die im normalen Fahrbetrieb auftretende, in vertikaler Richtung ausgeübte Kraft überwiegt. Bei diesen Bauteilen handelt es sich um die Längslenker 3, 4 und 8 bzw. um die mit der Fahrzeugstruktur 5 starr verbundenen Streben 10 und 12. Für den Fachmann ist erkennbar, daß die Sensoren 6 nicht unbedingt an diesen Bauteilen, sondern auch in unmittelbar benachbarten Bereichen der angrenzenden Bauteile, d. h. der Gabel 2 bzw. der Fahrzeugstruktur 5 angeordnet sein können. In den an die Längslenker 3, 4 und 8 bzw. an die Streben 10 und 12 angrenzenden Bereichen der Gabel 2 bzw. der Fahrzeugstruktur 5 herrschen nämlich die gleichen Kräfteverhältnisse.

### Bezugszeichenliste:

- 1: Vorderrad
- 2: Gabel
- 3: oberer Längslenker
- 4: unterer Längslenker
- 5: Fahrzeugstruktur
- 6: Dehnmeßstreifen
- 7: Beschleunigungssensor
- 8: Längslenker
- 9: Kugelgelenk
- 10: Strebe
- 11: Führungsrohr
- 12: Strebe

## Patentansprüche

1. Sensoranordnung zum Auslösen eines Airbags für Motorräder, bei denen die auf das Vorderrad ausgeübten Kräfte von der Gabel (2) über zwei in verschiedener Höhe angeordnete Bauteile in die Fahrzeugstruktur (5) eingeleitet werden, wobei im normalen Fahrbetrieb das obere Bauteil (3; 10) Druckkräfte und das untere Bauteil (4; 8; 12) Zugkräfte aufnimmt und bei einem Aufprall des Vorderrades gegen ein Hindernis umgekehrte Verhältnisse herrschen, **dadurch gekennzeichnet, daß** der Sensor (6) auf Kraft- oder Längenänderungen anspricht und an mindestens einem der beiden Bauteile (3, 4; 8, 10; 10, 12) angeordnet ist.

2. Sensoranordnung nach Anspruch 1 für Motorräder, bei den die Gabel (2) über obere und untere Längslenker (3, 4) mit der Fahrzeugstruktur (5) verbunden sind, **dadurch gekennzeichnet, daß** zumindest an einem der Längslenker (3, 4) ein Sensor (6) angeordnet ist.

3. Sensoranordnung nach Anspruch 1 für Motorräder, bei den die Gabel (2) über ein Kugelgelenk (9) und über einen Längslenker (8) mit der Fahrzeugstruktur (5) verbunden ist, **dadurch gekennzeichnet, daß** im Bereich des Kugelgelenks (9) und/oder an dem Längslenker (8) ein oder mehrere Sensoren (6) angeordnet sind.

4. Sensoranordnung nach Anspruch 1 für Motorräder, bei denen die Gabel (2) in einem Führungsrohr (11) gelagert ist, das über zwei in verschiedener Höhe angeordnete Streben (10, 12) mit der Fahrzeugstruktur verbunden ist, **dadurch gekennzeichnet, daß** zumindest an einer der beiden Streben (10, 12) ein Sensor (6) angeordnet ist.

5. Sensoranordnung nach einem der Ansprüche 1 bis 4, **dadurch gekennzeichnet, daß** der oder die Sensoren (6) von Dehnmeßstreifen oder Schaltern gebildet sind, die bei Verformung des Bauteils aktiviert werden.

6. Sensoranordnung nach einem der vorhergehenden Ansprüche, **dadurch gekennzeichnet, daß** zusätzlich ein auf Beschleunigungskräfte ansprechender Sensor (7) vorhanden ist.
